Europäisches Patentamt

European Patent Office

Office européen des brevets

(11) Veröffentlichungsnummer: **0 261 099 B1**

# EUROPÄISCHE PATENTSCHRIFT

(45) Veröffentlichungstag der Patentschrift: **05.02.92**

(51) Int. Cl.5: **G01F 23/26**

(21) Anmeldenummer: **87890200.6**

(22) Anmeldetag: **31.08.87**

(54) **Niveau-Messgerät für elektrisch nicht leitende Flüssigkeiten.**

(30) Priorität: **17.09.86 AT 2492/86**

(43) Veröffentlichungstag der Anmeldung:
**23.03.88 Patentblatt 88/12**

(45) Bekanntmachung des Hinweises auf die
Patenterteilung:
**05.02.92 Patentblatt 92/06**

(84) Benannte Vertragsstaaten:
**DE ES FR GB IT SE**

(56) Entgegenhaltungen:
**AT-B- 367 211**
**DE-A- 2 333 415**
**DE-A- 2 550 936**
**DE-A- 3 322 657**
**GB-A- 2 043 259**

(73) Patentinhaber: **AVL Gesellschaft für Verbrennungskraftmaschinen und Messtechnik
mbH.Prof.Dr.Dr.h.c. Hans List
Kleiststrasse 48
A-8020 Graz(AT)**

(72) Erfinder: **Fredericks, George E., Dipl.-Ing.
Dr. Robert-Graf-Strasse 25
A-8020 Graz(AT)**

(74) Vertreter: **Krause, Walter, Dr. Dipl.-Ing. et al
Postfach 200 Singerstrasse 8
A-1010 Wien(AT)**

**Beschreibung**

Die Erfindung bezieht sich auf ein Niveau-Meßgerät für elektrisch nicht leitende Flüssigkeiten, mit einer in einem Gefäß koaxial angeordneten, von der Flüssigkeit teilweise bedeckten Sensorelektrode, die mit der Wand des im wesentlichen vertikal stehenden Gefäßes einen Kondensator bildet, der mit einer die Kapazität dieses Kondensators erfassenden Auswerteschaltung verbunden ist, wobei die Kapazität dieses Kondensators unter Berücksichtigung einer im Gefäß angeordneten Kompensationselektrode ein Maß für das zu messende Niveau der Flüssigkeit im Gefäß darstellt.

Aus der DE-OS 33 22 657 ist eine Vorrichtung zur Füllstandsmessung mit einer in einem Behälter angeordneten Sonde bekannt. Die Sonde bildet eine Elektrode eines Kondensators, dessen andere Elektrode der Behälter ist. Die vom Füllstand aufgrund der unterschiedlichen Dielektrizitätskonstanten von Luft und Flüssigkeit abhängige Kapazität des Kondensators ist ein Maß für den Flüssigkeitsinhalt. Über eine an die Sonde angeschlossene Kapazitätsmeßschaltung wird das Meßsignal ausgewertet. Bei einer sich ändernden Dielektrizitätskonstante muß diese Vorrichtung jedoch neu geeicht werden.

Ein Niveau-Meßgerät der eingangs genannten Art, welches aus der GB-A 2 043 259 bekannt ist, weist eine Kompensationselektrode auf, die es ermöglicht, den allfälligen Einfluß einer sich ändernden Dielektrizitätskonstante der zu messenden Flüssigkeit zu kompensieren. Eine solche Änderung der Dielektrizitätskonstante kann z.B. durch eine Temperaturänderung der Flüssigkeit auftreten. Nachteiligerweise ist jedoch dieses Meßgerät im Hinblick auf die Einbauten im Meßgefäß relativ kompliziert aufgebaut und weist eine aufwendige Elektronik auf, welche in einen Schaltkreis für die Meßelektrode und einen für die Referenzelektrode unterteilt ist. Die Ausgangssignale beider Schaltkreise werden in einem Rechner mit Hilfe von Näherungsfunktionen verarbeitet.

Ziel der Erfindung ist es, ein Meßgerät der eingangs erwähnten Art vorzuschlagen das sich durch einen sehr einfachen mechanischen und elektronischen Aufbau auszeichnet und mit dem eine sehr hohe Auflösung erzielbar ist.

Erfindungsgemäß wird dies dadurch erreicht, daß im unteren Bereich des Gefäßes eine Treiberelektrode im wesentlichen koaxial zu der Sensorelektrode angeordnet ist, und daß sich die Kompensationselektrode zwischen der Treiberelektrode und der Wand des Gefäßes befindet, wobei beide Elektroden miteinander, mit der Sensorelektrode bzw. mit der Wand des Gefäßes weitere Kondensatoren bilden.

Dadurch ist ein sehr einfacher Aufbau des Gefäßes möglich, bei welchem alle Elektroden im wesentlichen koaxial um die als Draht ausgeführte Sensorelektrode ausgeführt sein können, wobei durch den Einbau einer Treiberelektrode die für die Signalauswertung notwendige Auswerteschaltung äußerst einfach gestaltet werden kann. Der zur Verwendung kommende mathematische Formalismus ist zudem einfacher und läßt sich ohne Zuhilfenahme von Rechnern bewältigen.

Es erübrigt sich zudem auch hier eine von der Dielektrizitätskonstante der zu messenden Flüssigkeit abhängige Eichung des Meßgerätes, wodurch dieses für verschiedene Flüssigkeiten ohne eine Nacheichung einsetzbar wird.

Zur Verbesserung der Linearität zwischen dem Pegelstand im Gefäß und dem Ausgangssignal des Meßgerätes, insbesondere bei kleineren Pegelständen, kann vorgesehen sein, daß oberhalb der Treiber- und der Kompensationselektrode eine mit der Wand des Gefäßes eletrisch verbundene, senkrecht zur Sensorelektrode angeordnete Schirmelektrode vorgesehen ist, die von der Sensorelektrode mit Spiel durchsetzt ist.

Für ein erfindungsgemäßes Meßgerät ist es wesentlich, daß die Auswerteschaltung auch für sehr kleine Kapazitätsänderungen sehr empfindlich ist und diese erfassen kann.

Bei einem erfindungsgemäßen Niveau-Meßgerät mit einer Auswerteschaltung, wie sie z.B. durch die AT-PS 367 211 bekannt geworden ist, bei welcher die durch einen kapazitiven Meßwandler, dessen durch die Sensorelektrode und die Wand des Gefäßes gebildete Kapazität in einer aus Kondensatoren aufgebauten Brücke gebildet ist, und bei dem die Verbindungspunkte jeweils zweier einen Brückenzweig bildender Kondensatoren mit je einem Verstärker verbunden sind, und die Ausgänge dieser Verstärker mit einem Differenzverstärker verbunden sind, wobei in Serie zu jedem der beiden Brückenzweige ein Schaltelement z.B. eine Diode, oder ein Transistor geschaltet ist, und diese beiden Schaltelemente mit ihren ersten Anschlüssen miteinander verbunden und an eine Hilfsspannungsquelle angeschlossen sind, und zumindest eines der Schaltelemente mit seinem zweiten Anschluß sowohl mit dem Brückenzweig als auch über passive strombegrenzende Bauelemente mit einem Ausgang des Differenzverstärkers verbunden ist, wogegen an dem zweiten Anschluß des zweiten Schaltelementes der zweite Brückenzweig und über passive strombegrenzende Bauteile ein festes Potential oder ein zweiter Differenzausgang des Differenzverstärkers angeschlossen ist, gebildet ist, kann nach einem weiteren Merkmal der Erfindung vorgesehen sein, daß der zweite Kondensator des Brückenzweiges der den durch die Sensorelektrode und die Wand des Gefäßes gebildeten Kondensator enthält, durch die Treiberelektrode des Gefäßes und die Sensorelektrode gebildete Kondensator ist, wogegen der zweite Brückenzweig durch feste Kondensatoren gebildet ist.

Ein solcher, für die Auswerteschaltung vorgesehener kapazitiver Meßwandler zeichnet sich durch besondere Einfachheiten im Aufbau und hohe Empfindlichkeit aus. Weiters ergibt sich, wie noch an Hand der Zeichnungen näher erläutert werden wird, auf sehr einfache Weise eine Kompensation des Einflusses der Dielektrizitätskonstante.

Eine besonders weitgehende Kompensation des Einflusses der Dielektrizitätskonstante auf das Meßergebnis ergibt sich, wenn zu dem durch die durch das Gefäß und dessen Sensor- und Treiberelektrode gebildeten Brückenzweig eine Serienschaltung von zwei Kondensatoren parallel geschaltet ist, die durch die Treiberelektrode und die Kompensationselektrode bzw. durch die letztere und die Wand des Gefäßes gebildet sind, wobei zu dem letzterem Kondensator ein Widerstand parallel geschaltet und an dem Verbindungspunkt der beiden Kondensatoren der Serienschaltung miteinander und dem Widerstand eine Kompensationsschaltung angeschlossen ist, deren Ausgang auf die die Brückenzweige speisende, vorzugsweise Rechteckimpulse liefernden Hilfsspannungsquelle einwirkt.

In diesem Zusammenhang kann nach einem weiteren Merkmal der Erfindung vorgesehen sein, daß die Kompensationsschaltung einen Komperator aufweist, dessen einer Eingang über eine Diode mit dem Verbindungspunkt der beiden in Serie geschalteten und zu einem Brückenzweig parallel geschalteten Kondensatoren verbunden ist, wobei noch ein Glättungskondensator an diesem Eingang angeschlossen ist, und der zweite Eingang des Komparators mit einem Referenzpotential und der Ausgang des Komparators über Widerstände mit den Verbindungspunkten der Schaltelemente mit den Brückenzweigen bzw. der Rückkopplung des Ausganges der Schaltung auf diese verbunden ist. Dadurch ergibt sich ein in schaltungstechnischer Hinsicht sehr einfacher Aufbau der Kompensationsschaltung.

Das erfindungsgemäße Meßgerät ist aber nicht nur zur Messung des Flüssigkeitsvolumens geeignet, sondern kann auch, nach entsprechender Adaption, z.B. im Sinne der AT-PS 370 518, als Durchflußmeßgerät verwendet werden. Dabei können zwei Gefäße hintereinander geschaltet werden, wobei die den Zu- und Ablauf zu und von den einzelnen Gefäßen steuernden Ventile in Abhängigkeit von der Erreichung bestimmter Pegel in den einzelnen Gefäßen gesteuert werden können.

Die Erfindung wird nun an Hand der Zeichnung näher erläutert.

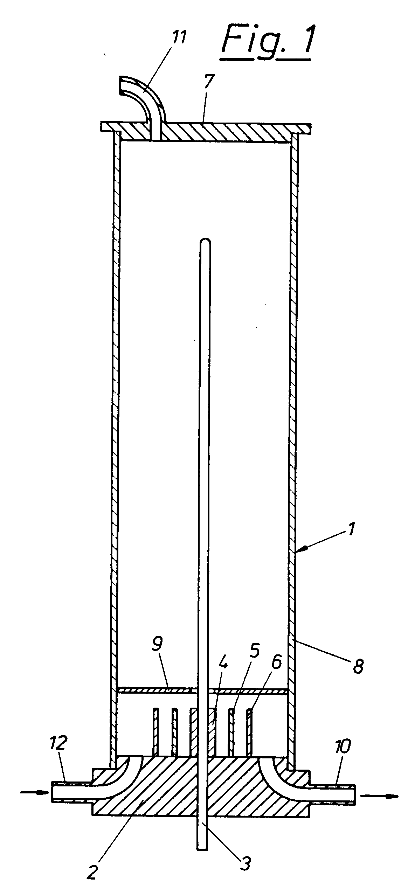

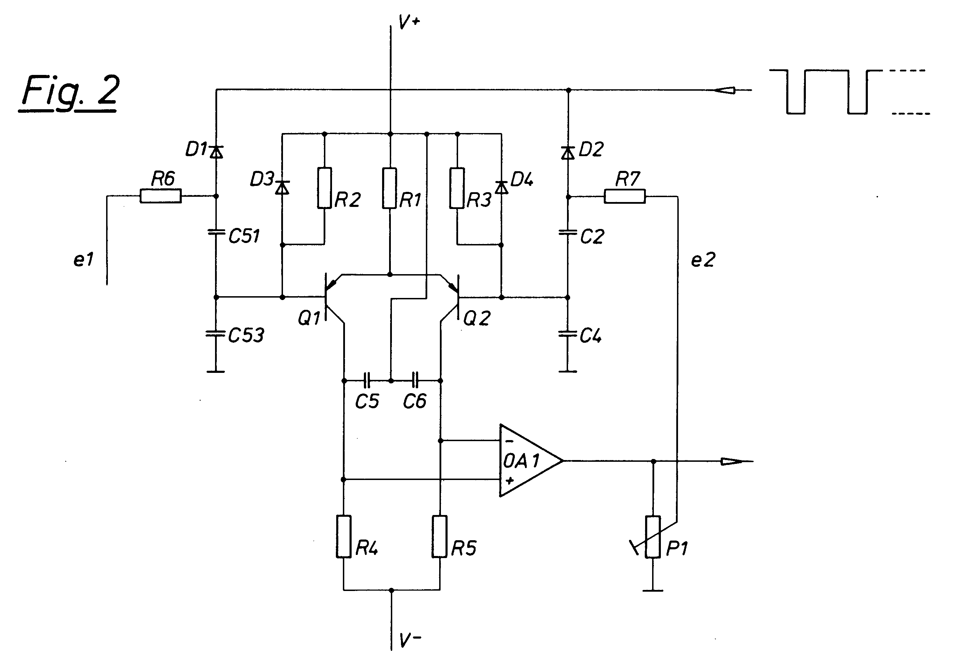

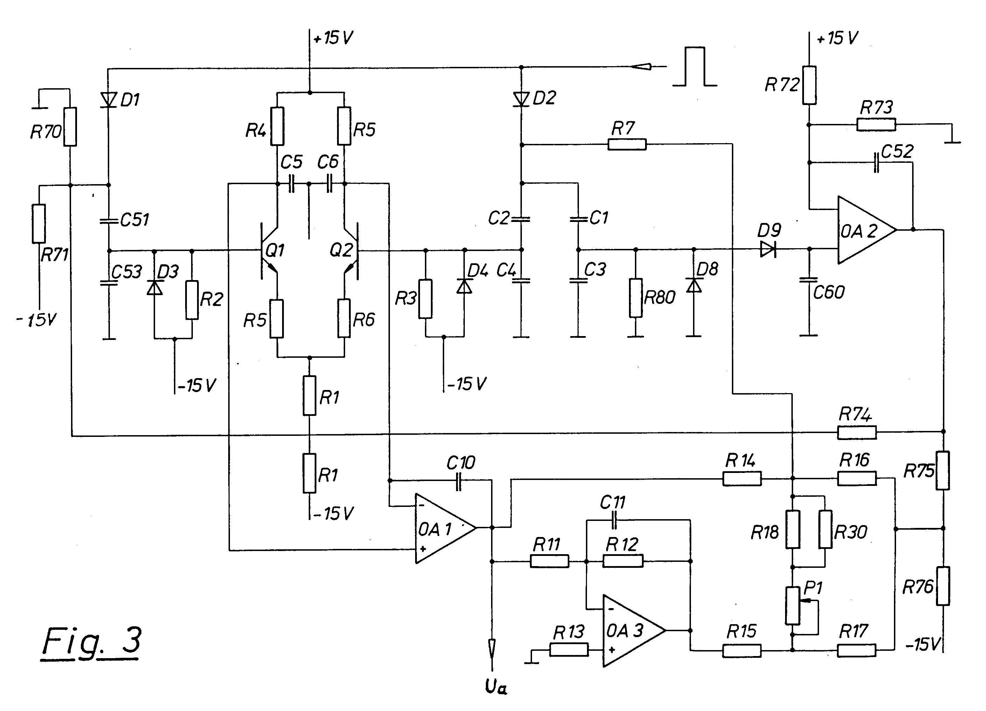

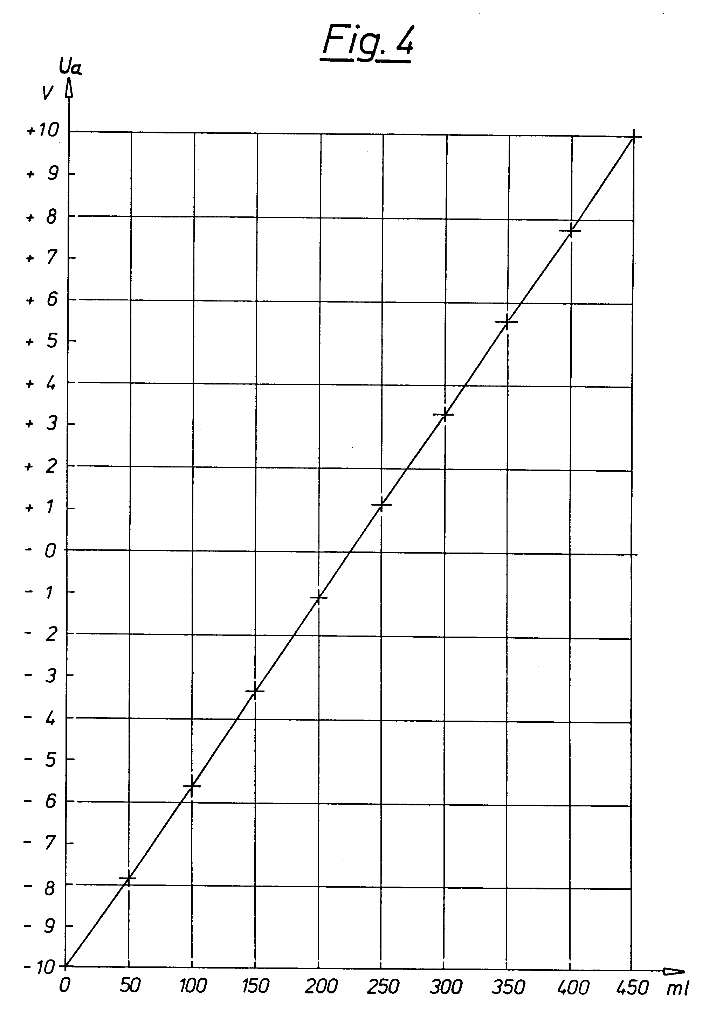

Dabei zeigt Fig. 1 den prinzipiellen Aufbau eines Meßgefäßes nach der Erfindung, Fig. 2 eine Auswerteschaltung nach dem Stand der Technik, Fig. 3 eine Auswerteschaltung für das Meßgefäß nach Fig. 1, und Fig. 4 eine Eichkurve eines erfindungsgemäßen Meßgerätes gemäß der Fig. 3.

Fig. 1 zeigt ein senkrecht stehendes Gefäß 1 mit einem als Sensorelektrode 3 dienenden, elektrisch leitenden Draht, der axial angeordnet ist. Die Sensorelektrode 3 ist durch eine das untere Ende des Gefäßes dicht verschließende Scheibe bzw. den Boden 2 des Gefäßes 1, der aus einem isolierenden Material besteht, dicht hindurchgeführt. Die Wand 8 des Gefäßes kann aus einem beliebigen Material hergestellt sein, doch wird Metall wegen seiner Formfestigkeit bevorzugt und kann, wenn die Wand geerdet wird, gleichzeitig als Abschirmung gegen äußers elektrische Einflüsse dienen.

Im unteren Bereich, der ständig von der zu messenden Flüssigkeit erfüllt ist, weist die Sensorelektrode 3 eine mit dieser leitend verbundene zylindrische Ergänzung 4 auf. Weiters ist eine Treiberelektrode 5 und eine zwischen dieser und der Wand 8 des Gefäßes 1 angeordnete Kompensationselektrode 6 vorgesehen, die beide zweckmäßigerweise als koaxial zur Sensorelektrode 3 angeordnete Ringe ausgebildet sind.

Diese zusätzlichen Elektroden 5,6 sind von einer Schirmelektrode 9 überdeckt, die mit der Wand 8 des Gefäßes 1 verbunden ist und die ihrerseits von der Sensorelektrode 3 mit Spiel durchsetzt ist.

Der Boden 2 wird von einer Zuleitung 12 und einer Ableitung 10 sowie von der Sensorelektrode 3 durchsetzt. Weiters weist das Gefäß 1 einen von der Entlüftung 11 durchsetzten Deckel 7 auf.

Das Meßprinzip einer bekannten Auswerteschaltung ohne Kompensation ist in Fig. 2 dargestellt. Die Sensorelektrode bildet dabei mit der Wand des Gefäßes einen Kondensator C4, dessen Kapazität aufgrund der verschieden großen Dielektrizitätskonstanten von Luft und der zu messenden Flüssigkeit vom Pegel der Flüssigkeit in dem Gefäß abhängt. Ist das Gefäß bis zu einem bestimmten Referenzpegel mit Flüssigkeit gefüllt, so stellt sich die Kapazität des Kondensators C4 als Summe zweier parallel geschalteter Kapazitäten $\epsilon C41$, $C42$ dar, wobei $C41$ die Kapazität zwischen der Sensorlektrode und der Wand von unten bis zum Referenzpegel als Luftkondensator, $C42$ die Kapazität der Sensorelektrode gegen die Wand im restlichen Gefäß als Luftelektrode und $\epsilon$ die Dielektrizitätskonstante der Flüssigkeit bedeuten, wobei die Dielektrizitätskonstante der Luft mit 1 angenommen ist.

Ändert sich nun der Flüssigkeitpegel in dem Gefäß so ändert sich, da die Dielektrizitätskonstante in die Gesamtkapazität des Gefäßes eingeht, auch die Kapazität, wobei die Kapazitätsänderung durch eine Auswerteschaltung erfaßt werden kann. Es sind zwei Brückenzweige vorgesehen, die durch Kondensatoren C51, C53 bzw. C2, C4 gebildet werden, wobei der Kondensator C4 durch das Gefäß bzw. dessen

EP 0 261 099 B1

Sensorelektrode 3 gebildet ist, und eine vom Füllstand in dem Gefäß 1 abhängige Kapazität aufweist.

Die einen Elektroden der Kondensatoren C53, C4 liegen gemeinsam auf einem festen Potential, z.B. Erde. Die beiden anderen Enden der beiden Brückenzweige sind über den Widerstand R6 an ein Potential e1, bzw. über den Widerstand R7 an ein Potential e2 gelegt, wobei das Potential e2 zwecks Rückkopplung über das Potentiometer P1 von der Ausgangsspannung der Auswerteschaltung abgenommen ist. Weiters sind diese Enden der Brückenzweige über die Dioden D1 und D2 mit einer nicht dargestellten Hilfsspannungsquelle verbunden, welche einen aus Rechteckimpulsen bestehenden Impulszug liefert.

Die Verbindungspunkte der beiden je einen Brückenzweig bildenden Kondensatoren C53, C51 bzw. C2, C4 sind mit den Basen der beiden, vorzugsweise in einem integrierten Pärchen zusammengefaßten Verstärkertransistoren Q1, Q2 verbunden, welche einen aus Rechteckimpulsen bestehenden Impulszug liefert.

Weiters sind diese Verbindungspunkte über Dioden D3, D4 und zu diesen parallel geschaltete Widerstände R2, R3 an ein festes Potential V+ gelegt. An diesem Potential liegt auch der gemeinsame Emitterwiderstand R1 der beiden Transistoren Q1, Q2 und weiters der gemeinsame Verbindungspunkt zweier zur Gleichtaktsprung-Begrenzung des Differenzverstärkers OA1 dienenden Kondensatoren C5, C6, welche mit den Kollektoren der Transistoren Q1, Q2 bzw. den Eingängen des Differenzverstärkers OA1 verbunden sind. Weiters sind die Kollektoren der Transistoren Q1, Q2 bzw. die Eingänge des Differenzverstärkers OA1 mit Widerständen R4,R5 verbunden, die gemeinsam an einem festen Potential V- liegen.

Diese Schaltung hat zwei Betriebszustände: Der erste Zustand, der im folgenden immer als Grundstellung bezeichnet wird, kommt vor, wenn der Impulseingang hoch ist ("hoch" bedeutet eine Spannung positiver als entweder das Potential e1 oder das Potential e2). Nach einiger Zeit in diesem Zustand fließt praktisch kein Strom in die Kapazitätsbrücke. Die Dioden D1 und D2 befinden sich im Sperrzustand. Die eine Elektrode von C51 liegt auf dem Potential e1, die eine Elektrode von C2 liegt auf Potential e2. Das Potential e2 wird bestimmt durch die Ausgangsspannung der Auswerteschaltung und die Einstellung des Potentiometers P1. Die Brückenmittelpunkte, und daher auch die Basen der zwei Transistoren Q1, Q2, liegen auf dem Potential eines der Pole V+ einer Gleichspannungsquelle u.zw. durch die Aufladung der Kondensatoren C53 und C4, die an Masse liegen, über die Widerstände R2 und R3. Da auch die Emitter der Transitoren Q1, Q2 über den Widerstand R1 mit dem gleichen Pol V+ verbunden sind, sperren die Transistoren Q1, Q2, und die mit ihren einen Elektroden mit dem Pol V+ verbundenen Kondensatoren C5, C6 werden aufgeladen. Der zweite Zustand der Schaltung, der im folgenden aktive Stellung genannt wird, kommt vor, wenn der Impulseingang auf LOW steht. "LOW" heißt, eine Spannung wesentlich negativer als das Potential e1 oder e2. Die Dioden D1 und D2 werden daher leitend. Die einen Elektroden von C51 und C2 fallen auf eine Spannung e3 ab, wobei e3 ein Potential ist, das um eine Diodendurchlaßspannung höher liegt als das am Impulseingang anstehende Potential. Wegen der steilen negativen Flanke der Eingangsimpulse fließt kurzzeitig ein relativ großer Strom durch die Kapazitätsbrücke C51, C53, C2, C4 und die Basen der zwei Transistoren Q1, Q2. Diese Basisströme bewirken verstärkte Kollektorströme, die ein Anheben des Potentials der über die Widerstände R4, R5 mit dem zweiten Pol V- der Gleichspannungsquelle verbundenen Elektroden der Kondensatoren C5, C6 bewirken.

Es wird vorerst angenommen, daß C51 gleich C2, und C53 gleich C4 sowie e2 gleich e1 ist. In diesem Fall sind die Ladungsübertragungen auf beiden Seiten der Brücke gleich und die zwei Transistoren Q1, Q2 bedingen gleich große Ladungsänderungen der Kondensatoren C5 und C6, sobald sie auf Grund eines am Impulseingang anstehenden "LOW"-Signals leitend geworden sind.

Wenn C53 nicht gleich C4 ist und e2 gleich e1 ist oder wenn C53 gleich C4 ist und e2 nicht gleich e1 ist, dann sind die Ladungsänderungen ungleich und C5 und C6 bekommen ungleiche Ladungen, wodurch sich die Ausgangsspannung des Verstärkers OA1 ändert. Die Schaltung verbleibt nur eine relativ kurze Zeit in diesem aktiven Zustand, und die positive Flanke des Eingangsimpulses bringt die Schaltung wieder in den Grundzustand. Die Dioden D3 und D4 begrenzen die Invers-Emitter-Basisspannungen und durch die dazu parallel geschalteten Widerstände R2, R3 wird eine Auswirkung allfälliger Ungleichheiten der Kennlinien der Dioden D3, D4 auf das Meßergebnis vermieden.

Die Impuls-Frequenz ist zweckmäßig so hoch wie möglich eingestellt, u.zw. mit Rücksicht auf die Zeit, welche die Schaltung benötigt, um sich auf ihren Grundzustand zu stabilisieren. Die Widerstände R4 und R5 sind so proportioniert, daß die Eingänge des Verstärkers OA1 innerhalb seines Gleichtaktspannungsbereiches bleiben, und daß die Kollektoren der zwei Transistoren immer eine negative Spannung aufweisen. Die Werte der Kondensatoren C5 und C6 sind so groß, daß der Gleichtaktsprung nach jedem negativen Eingangsimpuls klein bleibt.

Wenn der Verstärker OA1 eine hohe Leerlaufverstärkung aufweist, wobei die Schaltung durch Gegenkopplung vom Ausgang stabil gehalten wird, können sehr kleine Kapazitätsänderungen erfaßt und gemessen werden.

4

Das Potential e1 kann ein konstantes Potential (auch Null) sein, oder von einer Rückkopplung vom Verstärker OA1 gespeist werden, wenn dieser einen Differenzausgang besitzt.

An Stelle der Dioden D1 und D2 können auch Transistoren verwendet werden, die gemeinsam mit einem - vorzugsweise aus Rechteckimpulsen bestehenen - Impulszug an ihren Basen angesteuert werden, um alternierend eine Verbindung zwischen den Kondensatoren C2 bzw. C1 und einem festen Potential herzustellen, dessen Höhe selbstverständlich von jener der Potentiale e1 und e2 verschieden sein muß.

Bereits mit dieser Auswerteschaltung war es möglich sehr kleine Änderungen der Kapazität des aus der Sensorelektrode bzw. dem Gefäß bestehenden Kondensators C4 zu erfassen, wodurch sich eine hohe Auflösung ergibt und auch kleine Änderungen des Füllstandes im Gefäß erfaßt werden können.

Bei der bekannten Ausführungsform gemäß Fig. 2 mußte jedoch die Dielektrizitätskonstante der zu messenden Flüssigkeit bekannt sein, oder das entsprechende Gerät für eine bestimmte Flüssigkeit geeicht werden. Dabei mußten allfällige Änderungen der Dielektrizitätskonstante mit der Temperatur durch eine entsprechende Korrekturschaltung, oder mittels einer Korrekturtabelle kompensiert bzw. korrigiert werden.

Um das Ausgangssignal der Auswerteschaltung gemäß Fig. 2 unabhängig von der Dielektrizitätskonstante der zu messenden Flüssigkeit zu machen, wird erfindungsgemäß von folgenden überlegungen ausgegangen:

Bei einer Änderung der Dielektrizitätskonstante darf sich das Ausgangssignal bei gleichbleibendem Füllstand im Gefäß 1 nicht ändern und bei Niveauänderungen muß die Empfindlichkeit

$$\frac{d\ Ua}{d\ L}$$

gleich bleiben. Dabei bedeuten Ua die Ausgangsspannung der Auswertesschaltung, und L das Flüssigkeitniveau.

Die Auswerteschaltung gemäß Fig. 2 weist folgende übertragungsfunktionen auf:

$$Ua = \frac{U - m}{b} \quad \left[ -1 - n\ (1 + \frac{C4}{C2}) \right] \qquad \cdot \tag{1}$$

wobei
Ua die Ausgangsspannung bezogen auf Masse (Erde)
U die Impulsamplitude und
b, m, n Konstante bedeuten.
Wenn

$$\frac{C4}{C2} = \frac{\mathcal{E}\,C41\ +\ C42}{C2}$$

bei Änderung von $\epsilon$ gleich bleiben soll, muß auch C 2 abhängig von der Dielektrizitätskonstante $\epsilon$ sein. ($\epsilon$C41, C42 siehe Seite 6)

Wird nun der Kondensator als Parallelschaltung zweier Kondensatoren angenommen so ergibt sich

$$C2 = {}_\epsilon C21\ +\ C22 \tag{2}$$

wobei, C21 als ein "Luftkondensator" angenommen ist, der in der gleichen Flüssigkeit wie C 41 eingetaucht ist. Um den Wert des Kondensators gleich zu halten wird ein Kondensator mit festem Wert, C22 als parallel zu $_\epsilon$C21 geschaltet betrachtet.

Damit ergibt sich:

$$\frac{C4}{C2} = \frac{\mathcal{E}\,C41\ +\ C42}{\epsilon\,C21\ +\ C22}$$

wobei $\frac{C4}{C2}$ als konstant angenommen wird.
Es gilt somit

$$\frac{d\,\frac{C4}{C2}}{d\mathcal{E}} = \frac{C41 \cdot (\mathcal{E} \cdot C21 + C22) - C21 \cdot (\mathcal{E} \cdot C41 + C42)}{(\mathcal{E} \cdot C21 + C22)^2} = 0$$

$$\frac{d\,\frac{C4}{C2}}{d\mathcal{E}} = \frac{C22C41 - C21C42}{(\mathcal{E}C21 + C22)^2} = 0$$

$$C22 \cdot C41 = C21 \cdot C42 \tag{3}$$

Das heißt, wenn C22 gleich

$$\frac{C21C42}{C41}$$

ist, ändert sich weder $\frac{C4}{C2}$ noch Ua bei einer Änderung von $\epsilon$.

Damit läßt sich eine Änderung der Dielektrizitätskonstante kompensieren, sodaß eine solche ohne Auswirkung auf das dem Füllstand im Gefäß 1 entsprechende Ausgangssignal bleibt.

Weiters soll der Forderung nach konstanter Empfindlichkeit

$$\frac{d\;Ua}{dL}$$

bei einer Änderung der Dielektrizitätskonstante der zu messenden Flüssigkeit entsprochen werden.

Die Elektroden 5, 6, 9, die aus Metall, vorzugsweise aus rostfreiem Stahl hergestellt sind, bilden die aus Fig. 3 ersichtlichen weiteren Kondensatoren u.zw.:

Kondensator C1     Treiberelektrode 5 gegen die Kompensationselektrode 6.

Kondensator C2     Treiberelektrode 5 gegen die Sensorelektrode 3 samt Ergänzung 4.

Kondensator C3     Kompensationselektrode 6 gegen die Wand 8 samt Schirm 9.

Kondensator C4     Sensorelektrode 3 samt Ergänzung 4 gegen die Wand 8 samt Schirm 9.

Kondensator C5     Treiberelektrode 5 gegen die Wand 8 samt Schirm 9.

Kondensator C6     Sensorelektrode 3 samt Ergänzung 4 gegen die Kompensationselektrode 6.

Diese Kondensatoren bzw. deren Elektroden mit Ausnahme von C4 sind ständig und vollständig mit der zu messenden Flüssigkeit bedeckt.

Dabei sind nur die Kondensatoren C1, C2, C3, C4 maßgebend für die Wirkungsweise des Gerätes, wogegen C5 und C6 Streukapazitäten sind und nur maßgebend für die Messung der anderen Kapazitäten sind.

Der Kondensator C2, bildet bei der Schaltung gemäß Fig. 3 zusammen mit dem Kondensator C4 ein kapazitives Brückenglied. Die Treiberelektrode 5 wird, mit Rechteckimpulsen gespeist und die Amplitude der Impulse, die auf der Sensorelektrode 3 erscheinen, ist abhängig vom Verhältnis der Kapazitäten der Kondensatoren C4 zu C2. Der Wert eines Teiles des Kondensators C2, ($\epsilon$C21), ist von der dielektrischen Konstante $\epsilon$ der Flüssigkeit abhängig, aber für eine bestimmte Flüssigkeit z.B. Kraftstoff, und bei konstanter Temperatur bleibt $\epsilon$C21 konstant. Das Dielektrikum von C4 ist teilweise Flüssigkeit und teilweise Luft und der Wert von C4 ist für eine bestimmte Flüssigkeit und bei konstanter Temperatur nur vom Flüssigkeitsniveau L abhängig. Zwischen den Niveaugrenzen ist das Verhältnis der Kapazität des Kondensators C4 zum Flüssigkeitsnivau L linear.

Die Serienschaltung der Kondensatoren C1 und C3 bildet einen kapazitiven Spannungssteiler, der von der gleichen Rechteckwelle wie die Kondensatoren C2 und C4 gespeist wird. Der Kondensator C3 ist mit einem Parallelwiderstand R80 versehen, welcher einen niederen Wert im Verhältnis zum Scheinwiderstand des Kondensators C3 hat, wobei der Impulsstrom durch den Widerstand R80 praktisch unabhängig vom Kondensator C3 und nur vom Kondensator C1 abhängig ist. Der Wert des Kondensators C1 ändert sich mit der dielektrischen Konstante der Flüssigkeit und, wie vorher beschrieben, wird dieser, von $\epsilon$ abhängige Impulsstrom zur Kompensation für die von der Flüssigkeit und von der Temperatur abhängigen $\epsilon$-Werte verwendet.

Der Ausgang Ua der elektronischen Schaltung ist mit dem Flüssigkeitsniveau L innerhalb 0,1% linear, aber diese Linearität ist nur zwischen bestimmten Niveaugrenzen zu erwarten.

Der Schirm 9 gemäß Fig. 1 verlängert den linearen Bereich nach unten.

Durch die Ausführung des Meßgefäßes 1 entsprechend der Fig. 1 und der Auswerteschaltung entsprechend der Fig. 3 gelingt es, die Empfinglichkeit unabhängig von der Dielektrizitätskonstante der zu messenden Flüssigkeit zu machen. Dies ergibt sich durch folgenden Umstand:

Wenn sich das Niveau L der Flüssigkeit im Meßgefäß ändert, so ändert sich auch

$$\frac{C4}{C2}$$

Durch Differentiation der Übertragungsfunktion der Auswerteschaltung gemäß Fig. 2 ergibt sich:

$$\frac{dUa}{dC4} = - \frac{n(L - m)}{bC2} \qquad (4)$$

Dabei ist der Wert des Kondensators C4 eine Funktion des Füllstandes. Der Wert des Kondensators C2 ändert sich dagegen bei einer Änderung des Füllstandes im Meßgefäß 1 nicht, da die den Kondensator C2 bildende Elektrode 5 immer vollständig in der zu messenden Flüssigkeit eingetaucht ist und sich daher der Wert $\epsilon C21$ nicht ändert.

Die den Wert $\epsilon C21$ auf den tatsächlichen Wert des Kondensators C2 entsprechende Kapazität C22 weist, wie bereits erwähnt, einen festen Wert auf. Damit ist die Ausgangsspannung Ua linear zu dem Wert des Kondensators C4, der seinerseits eine Funktion f = (L) des Füllstandes im Meßgefäß darstellt.

Setzt man nun

C4 = $\epsilon$C43 + C44    (5)

wobei C43 die Kapazität des Teiles der Sensorelektrode 3 ist, der von der Flüssigkeit umgeben ist und C44 die Kapazität des, von der Luft umgebenen Teils der Sensorelektrode 3 ist. Bei zunehmendem Niveau wird $\epsilon C43$ erhöht und C44 vermindert, wobei aber die Summe aus C43 + C44 konstant bleibt, weil diese Summe der Kapazität des Sensors entspricht, wenn das Meßgefäß 1 leer ist.

Das heißt:

C43 + C44 = a, eine messbare Konstante
C44 = a - C43    (6)

kombiniert man die Formeln (5) und (6) so ergibt sich

C4 = C43 ($\epsilon$-1) + a    (7)

Weiters ist

$$\frac{dC43}{dL} = m \qquad (8)$$

wobei m der Kapazität pro Längeneinheit der Sensorelektrode 3 in Luft entspricht.

Eine Integration ergibt

C43 = mL + n    (9)

Aus den Formeln (7) und (9) ergibt sich:

C4 = (ml + C41) $^\bullet$ ($\epsilon$-1) + a    (10)

Die Kapazität C4 ist mit dem Niveau L im Meßgefäß 1 linear, doch hängt die Steilheit von der Dielektrizitätskonstante $\epsilon$ der zu messenden Flüssigkeit ab.

Diese Abhängigkeit wird durch eine entsprechende Ausbildung der Auswerteschaltung kompensiert, welche eine zu dem die variable Kapazität C4 enthaltenden Brückenzweig parallel geschaltete Kompensationschaltung C1, C3, R80, D8, D9, C60, OA2 samt Beschaltung und ein Widerstandsnetzwerk aufweist. Weiters ist in den Rückkopplungskreis ein aktiver Bauteil eingeschaltet.

Die Kompensationsschaltung weist eine Serienschaltung der Kapazitäten C1, die durch die stets vollständige in der zu messenden Flüssigkeit eingetauchten Elektroden 5 und 6 gebildet ist, mit der Kapazität C3 auf, die durch die stets vollständig in die Flüssigkeit eingetauchte Kompensationselektrode 6 und die Wand 8 samt Schirmelektrode 9, die ebenfalls stets in die Flüssigkeit eingetaucht ist, gebildet ist, wobei diese Serienschaltung parallel zu dem Brückenzweig mit den Kondensatoren C2 und C4 geschaltet ist, von denen der Kondensator C4 eine mit dem Füllstand im Meßgefäß 1 variable Kapazität aufweist.

Wie aus Fig. 3 ersichtlich, wird die durch den Impulsstrom der Hilfsspannungsquelle, der durch die Kondensatoren C1, C3 sowie den Widerstand R80 fließt, an dem Widerstand R80 abfallende Spannung durch die Diode D9 gleichgerichtet und durch den Kondensator C60 geglättet und an den Eingang eines als Inverter wirkenden Differenzverstärkers OA2 gelegt, dessen zweiter Eingang mittels des Spannungsteilers R72, R73 mit einer Referenzspannung beaufschlagt ist. Die Beschaltung des Differenzverstärkers OA2 mit dem Kondensator C52 dient lediglich der Dämpfung von allenfalls auftretenden HF- Schwingungen.

Das Ausgangssignal dieses Differenzverstärkers OA2 wird über die Widerstände R74 bzw. R75, R16, R7 an die Brückenzweige C51, C53, C2, C4 gelegt und beeinflußt deren Beaufschlagung. Da der Kondensator C1 vollständig in die Flüssigkeit eingetaucht ist, ändert sich dessen Wert, wenn sich die Dielektrizitätskonstante der Flüssigkeit ändert. Dies führt aber zu einer Änderung der an dem einen Eingang des Differenzverstärkers OA2 anliegende Spannung und damit zu einer Änderung seiner Ausgangsspannung, wodurch eine Kompensation des Einflusses der Änderung der Dielektrizitätskonstante erreicht wird. Dabei wird der durch die Kapazität C1 fließende Strom dazu verwendet, die Amplitude des Brückenspeiseimpulses so zu steuern , daß

$$\frac{dU_a}{dL}$$

bei einer Änderung der Dielektrizitätskonstante $\epsilon$ der Flüssigkeit konstant bleibt.

Dies wird durch das Widerstandsnetzwerk R75, R76, R16, R17, R18, R15, R30 und den Einstellwiderstand P1 erreicht, das an einer festen Spannung -15V und über einen weiteren Operationsverstärker OA3, der ebenfalls als Inverter wirkt und zur Dämpfung von HF- Schwingungen mit einem Kondensator C11 beschaltet ist, und einen Widerstand R11 an der Ausgangsspannung Ua liegt. Der Operationsverstärker OA3 erlaubt überdies große Spannungssprünge beim positiven Sprung der Eingangsimpulse, wodurch eine hohe Empfindlichkeit der Auswerteschaltung erreicht werden kann.

Durch das Widerstandsnetzwerk R14 bis R18 und R30 sowie den Einstellwiderstand P1 ist es möglich die Empfindlichkeit einzustellen, ohne daß sich dadurch die Verhältnisse in der Grundstellung der Schaltung, insbesondere die Höhe der Potentiale e1 und e2 ändern. Weiters ergibt sich durch die Auslegung der Widerstände R74, R75 und R76 die Möglichkeit, die Potentiale e1 und e2 auf einen gewünschten Wert, beispielsweise -7,5 V, einzustellen.

Bei einer bevorzugten Ausführungsform eines erfindungsgemäßen Meßgefäßes ist dessen zylindrische Wand 8 aus rostfreiem Stahl hergestellt und weist einen Innendurchmesser von 80 mm und eine Länge von 270mm auf.

Der Boden 2 besteht aus Kunststoff und die Sensorelektrode 3 ist durch einen steifen Draht aus rostfreiem Stahl gebildet, der einen Durchmesser von 3mm aufweist.

Die zylindrische Ergänzung 4 der Sensorelektrode 3 ist auf dieser befestigt und weist einen Durchmesser von 12mm und eine Länge von 25mm auf.

Die ringförmige Treiberelektrode 5 und die ebenfalls ringförmige Kompensationselektrode 6 sind aus rostfreiem Stahl hergestellt und weisen eine Länge von 30mm und eine Wandstärke von 1,5mm auf, wobei der Durchmesser der Treiberelektrode 5 16mm und jener der Kompensationselektrode 6 40mm beträgt.

Die Schirmelektrode 9 ist durch eine Blechscheibe gebildet, die ein Loch mit einem Durchmesser von 16mm aufweist, das von der Sensorelektrode 3 durchsetzt ist, wobei die Schirmelektrode 9 mit der Wand 8 und über diese mit Masse verbunden ist.

Grundsätzlich ist zu bemerken, daß die Elektroden keineswegs, wie oben angegeben, aus rostfreiem Stahl hergestellt sein müssen. Dies ist lediglich aufgrund der Aggressivität mancher Flüssigkeiten, wie z.B. manche Kraftstoffe zu empfehlen, doch kann ein entsprechender Korrosionsschutz auch durch die Wahl anderer, korrosionsunempfindlicher Materialien, wie z.B. verschiedene Aluminiumlegierungen, oder durch die Aufbringung von Schutzüberzügen auf ein an sich nicht korrosionsbständiges Material erreicht werden. Dafür eignen sich sowohl metallische als auch nichtmetallische überzüge, wie z.B. Lacke.

## Patentansprüche

1. Niveau-Meßgerät für elektrisch nicht leitende Flüssigkeiten, mit einer in einem Gefäß koaxial angeordneten, von der Flüssigkeit teilweise bedeckten Sensorelektrode, die mit der Wand des im wesentlichen vertikal stehenden Gefäßes einen Kondensator bildet, der mit einer die Kapazität dieses Kondensators erfassenden Auswerteschaltung verbunden ist, wobei die Kapazität dieses Kondensators unter Berücksichtigung einer im Gefäß angeordneten Kompensationselektrode ein Maß für das zu messende Niveau der Flüssigkeit im Gefäß darstellt, dadurch gekennzeichnet, daß im unteren Bereich des Gefäßes (1) eine Treiberelektrode (5) im wesentlichen koaxial zu der Sensorelektrode (3,4) angeordnet ist, und daß sich die Kompensationselektrode (6) zwischen der Treiberelektrode (5) und der Wand (8) des Gefäßes (1) befindet, wobei beide Elektroden (5,6) miteinander, mit der Sensorelektrode (3,4) bzw. mit der Wand (8) des Gefäßes (1) weitere Kondensatoren bilden.

2. Niveau-Meßgerät nach Anspruch 1, dadurch gekennzeichnet, daß oberhalb der Treiber- und Kompensationselektrode (5, 6) eine mit der Wand (8) des Gefäßes (1) elektrisch verbundene, senkrecht zur Sensorelektrode (3,4) angeordnete Schirmelektrode (9) vorgesehen ist, die von der Sensorelektrode (3) mit Spiel durchsetzt ist.

3. Niveau-Meßgerät nach Anspruch 1, mit einer Auswerteschaltung, die durch einen kapazitiven Meßwandler, dessen durch die Sensorelektrode und die Wand des Gefäßes gebildete Kapazität (C4) in einer aus Kondensatoren (C51, C53, C2, C4) aufgebauten Brücke gebildet ist, und bei dem die Verbindungspunkte jeweils zweier einen Brückenzweig bildender Kondensatoren (C51,C52;C2,C4) mit je einem Verstärker (Q1,Q2) verbunden sind, und die Ausgänge dieser Verstärker mit einem Differenzverstärker (OA1) verbunden sind, wobei in Serie zu jedem der beiden Brückenzweige (C51,C53, bzw. C2,C4) ein Schaltelement z.B. eine Diode (D1, D2) oder ein Transistor geschaltet ist, und diese beiden Schaltelemente mit ihren ersten Anschlüssen miteinander verbunden und an eine Hilfsspannungsquelle angeschlossen sind, und zumindest eines der Schaltelemente mit seinem zweiten Anschluß sowohl mit dem Brückenzweig (C2, C4) als auch über passive strombegrenzende Bauelemente (R7, R14) mit einem Ausgang des Differenzverstärkers (OA1) verbunden ist, wogegen an dem zweiten Anschluß des zweiten Schaltelementes der zweite Brückenzweig (C51,C53) und über passive strombegrenzende Bauteile (R71) ein festes Potential oder ein zweiter Differenzausgang des Differenzverstärkers (OA1) angeschlossen ist, gebildet ist, dadurch gekennzeichnet, daß der zweite Kondensator (C2) des Brückenzweiges (C2, C4), der den durch die Sensorelektrode (3,4) und die Wand (1) des Gefäßes gebildeten Kondensator (C4) enthält, durch die Treiberelektrode (5) des Gefäßes und die Sensorelektrode (3,4) gebildete Kondensator (C2) ist, wogegen der zweite Brückenzweig durch feste Kondensatoren (C51,C3) gebildet ist.

4. Niveau-Meßgerät nach Anspruch 3, dadurch gekennzeichnet, daß zu dem durch die durch das Gefäß und dessen Sensor- und Treiberelektroden (3,4,5) gebildeten Brückenzweig (C2,C4) eine Serienschaltung von zwei Kondensatoren (C1,C3) parallelgeschaltet ist, die durch die Treiberelektrode (5) und die Kompensationselektrode (6) bzw. durch die letztere und die Wand (8) des Gefäßes (1) gebildet sind, wobei zu dem letzterem Kondensator (C3) ein Widerstand (R80) parallel geschaltet und an dem Verbindungspunkt der beiden Kondensatoren (C1,C3) der Serienschaltung miteinander und dem Widerstand (R80) eine Kompensationsschaltung (D9,C60,OA2) angeschlossen ist, deren Ausgang auf die die Brückenzweige (C51,C3;C2,C4) speisende, vorzugsweise Rechteckimpulse liefernde Hilfsspannungsquelle einwirkt.

5. Niveau-Meßgerät nach Anspruch 4, dadurch gekennzeichnet, daß die Kompensationsschaltung einen Komparator (OA2) aufweist, dessen einer Eingang ( + ) über eine Diode (D9) mit dem Verbindungspunkt der beiden in Serie geschalteten und zu einem Brückenzweig (C2,C4) parallel geschalteten Kondensatoren (C1,C3) verbunden ist, wobei noch ein Glättungskondensator (C60) an diesem Eingang ( + ) angeschlossen ist und der zweite Eingang (-) des Komparators (OA2) mit einem Referenzpotential ( + 15V) und der Ausgang des Komparators über Widerstände (R74;R75,R16) mit den Verbindungspunkten der Schaltelemente (D1,D2) mit den Brückenzweigen (C51,C3; C2,C4) bzw. der Rückkopplung (R14,R8) des Ausganges der Schaltung auf diese verbunden ist.

## Claims

1. Level-measuring instrument for electrically non-conducting liquids with a sensing electrode arranged co-axially in a vessel and partially immersed in the liquid, the electrode forming with the wall of the substantially upright vessel a capacitor which is connected to a measuring circuit which determines the capacity of this capacitor, the capacity of this capacitor representing a measure of the level of liquid in the vessel to be measured, taking into account a compensating electrode arranged in the vessel, characterised in that in the lower portion of the vessel (1) there is arranged a driving electrode (5) substantially co-axial with the sensing electrode (3,4) and that the compensating electrode (6) is present between the driving electrode (5) and the wall (8) of the vessel (1), the two electrodes (5,6) forming further capacitors with each other, with the sensing electrode (3,4) and with the wall (8) of the vessel (1).

2. Level-measuring instrument according to claim 1 characterised in that there is provided above the driving and compensating electrodes (5, 6) a shielding electrode (9) arranged perpendicular to the sensing electrode (3, 4) and electrically connected to the wall (8) of the vessel (1), and through which the sensing electrode (3) extends with clearance.

3. Level-measuring instrument according to claim 1 with an evaluating circuit which is formed by a capacitive instrument transformer of which the capacity (C4) formed by the sensing electrode and the wall of the vessel is arranged in a bridge formed of capacitors (C51, C53, C2, C4), and in which the connecting points respectively of two capacitors (C51, C52; C2, C4) forming an arm of the bridge are each connected to a respective amplifier (Q1, Q2) and the outputs of these amplifiers are connected to a differential amplifier (OA1), a circuit element e.g. a diode (D1, D2) or a transistor being connected in series with each of the two arms of the bridge (C51, C53 and C2, C4) and these two circuit elements being connected together by their first terminals and being connected to an auxiliary voltage source and at least one of the circuit elements being connected by its second terminal both to the arm (C2, C4) of the bridge and also through passive current-limiting circuit elements (R7, R14) to an output of the differential amplifier (OA1), whereas to the second terminal of the second circuit element there are connected the second arm (C51, C53) of the bridge and, through passive current-limiting components (R71), a fixed potential or a second difference output of the differential amplifier (OA1), characterised in that the second capacitor (C2) in the arm (C2, C4) of the bridge which contains the capacitor (C4) formed by the sensing electrode (3, 4) and the wall (1) of the vessel, is the capacitor (C2) formed by the driving electrode (5) of the vessel and the sensing electrode (3, 4), whereas the other arm of the bridge is formed by fixed capacitors (C51, C3)

4. Level-measuring instrument according to claim 3 characterised in that there is connected in parallel with that arm (C2, C4) of the bridge formed by the vessel and its sensing and driving electrodes (3, 4, 5), a series circuit comprising two capacitors (C1, C3) which are formed by the driving electrode (5) and the compensating electrode (6) and by the latter and the wall (8) of the vessel (1), a resistor (R80) being connected in parallel with the last-mentioned capacitor (C3), and at the connecting point between the two capacitors (C1, C3) of the series circuit and the resistor (R80) there is connected a compensating circuit (D9, C60, OA2) of which the output influences the auxiliary voltage source which feeds the arms of the bridge (C51, C3; C2, C4) preferably delivering rectangular pulses.

5. Level-measuring instrument according to claim 4 characterised in that the compensating circuit includes a comparator (OA2) of which one input (+) is connected through a diode (D9) to the connecting point of the two capacitors (C1, C3) connected in series and connected in parallel with one arm (C2, C4) of the bridge, a smoothing capacitor (C60) also being connected to this input (+) and the second input (-) of the comparator (OA2) being connected to a reference potential (+15V) and the output of the comparator being connected through resistors (R74; R75, R16) to the connecting points of the circuit elements (D1, D2) with the arms of the bridge (C51, C3; C2, C4) and/or the reaction or feedback path (R14, R8) of the output of the circuit to these.

**Revendications**

1. Appareil de mesure de niveau pour liquides non conducteurs électriquement, avec une électrode-capteur, qui est disposée coaxialement dans un récipient et partiellement recouverte de liquide et qui forme un condensateur avec la paroi du récipient principalement vertical et qui est reliée à un circuit d'exploitation mesurant la capacité de ce condensateur. La capacité de ce condensateur représentant une valeur pour le niveau de liquide qui est à mesurer dans le récipient, en considérant une électrode de compensation qui est disposée dans le récipient, appareil carcatérisé en ce qu'une électrode d'excitation (5) est disposée dans la zone inférieure du récipient (1), principalement coaxialement à l'électrode-capteur (3, 4) et que l'électrode de compensation (6) se trouve entre l'électrode d'excitation (5) et la paroi (8) du récipient (1), faisant que les deux électrodes (5, 6) forment ensemble d'autres condensateurs avec l'électrode-capteur (3, 4), respectivement avec la paroi (8) du récipient (1).

2. Appareil de mesure de niveau selon la revendication 1, caractérisé en ce qu'une électrode-écran (9) est prévue au-dessus de l'électrode d'excitation et de l'électrode de compensation (5, 6), reliée électriquement à la paroi (8) du récipient (1) et disposée verticalement par rapport à l'électrode-capteur et qui est traversée par l'électrode-capteur (3) avec un jeu.

3. Appareil de mesure de niveau selon la revendication 1, qui est formé par un convertisseur de mesure capacitif, dont la capacité (C4) est formée par l'électrode-capteur et la paroi du récipient, dans un pont formé à partir des condensateurs (CS1, CS3, C2, C4) et dans lequel les points de liaison entre deux condensateurs (CS1, CS2, C2, C4), formant une branche de pont, sont reliés à un amplificateur différentiel (OA1), un élément de circuit, par exemple une diode (D1, D2) ou bien un transistor, étant à cette occasion branché en série par rapport à chacune des deux branches de pont (D1, D2) et que ces deux éléments de circuit sont reliés entre-eux par leurs raccordements et raccordés à une source de tension auxillaire, et qu'au moins l'un des éléments de circuit est relié, avec son deuxième raccordement, aussi bien à la branche de pont (C2, C4), qu'également par un élément de construction passif (R7, R14) limiteur de courant, à la sortie de l'amplificateur différentiel (OA1), tandis qu'un potentiel fixe, ou bien une deuxième sortie différentielle de l'amplificateur différentiel (OA1) est raccordée au deuxième raccordement du deuxième élément de circuit de la deuxième branche de pont (CS1, CS3) et par un élément de circuit (R71) passif, limiteur de courant caractérisé en ce que le deuxième condensateur (C2) de la branche de pont (C2, C4), qui contient le condensateur (C4) formé par l'électrode-capteur (3, 4) et la paroi (1) du récipient, est le condensateur (C2) formé par l'électrode d'excitation (5) du récipient et l'électrode-capteur (3, 4) tandis que la deuxième branche de pont est formée par des condensateurs fixes (CS1, C3).

4. Appareil de mesure de niveau selon la revendication 3, caractérisé en ce qu'un branchement en série de deux condensateurs (C1, C3) est branché en parallèle, à la branche de pont (C2, C4) formée par le récipient et ses électrodes-capteur et d'excitation (3, 4, 5) et que ces condensateurs sont formés grâce à l'électrode d'excitation (5) et à l'électrode de compensation (6), respectivement par cette dernière et la paroi (8) du récipient, une résistance (R80) étant branchée en plus du dernier condensateur (C3) et un circuit de compensation (D9, C60, OA2) est raccordé au point de liaison des deux condensateurs (C1, C3) du branchement en série et avec la résistance (R 80) dont la sortie agit sur la source de tension auxiliaire délivrant avantageusement des impulsions rectangulaires et alimentant les branches de pont (CS1, C3, C2, C4).

5. Appareil de mesure de niveau selon la revendication 4, caractérisé en ce que le circuit de compensation possède un comparateur (OA2) dont une entrée (+) est reliée par une diode (D9) au point de liaison des deux condensateurs (C2, C4) branchés en série et branchés en parallèle à sa branche de pont, un condensateur de lissage (C 60) étant encore raccordé à cette entrée (+) et la deuxième sortie (-) du comparateur (OA2) étant reliée à un potentiel de référence (+ 15 V), et la sortie du comparateur étant reliée par des résistances (R74, R75, R16) aux points de liaison des éléments de circuit (D1, D2), avec les branches de pont (CS1, C3, C2, C4), respectivement avec la réaction (R14, R8) de la sortie du circuit sur celui-ci.

_Fig._1_

Fig. 2

EP 0 261 099 B1

_Fig. 3_

EP 0 261 099 B1

# *Fig. 4*